# EUROPÄISCHE PATENTSCHRIFT

(11) **EP 0 431 681 B1**
(45) Veröffentlichungstag und Bekanntmachung des Hinweises auf die Patenterteilung: **11.08.1993**
(21) Anmeldenummer: 90203153.3
(22) Anmeldetag: 29.11.1990
(51) Int. Cl.: B21C 23/14, B21C 25/00, B23B 51/06

(54) **Verfahren und Strangpresswerkzeug zur Herstellung eines Rohlings mit innenliegenden Bohrungen**
Method and extrusion tool for making a blank with internal bores
Procédé et outil d'extrusion pour la fabrication d'une ébauche pourvue d'alésages internes

(30) Priorität: 04.12.1989 AT 2751/89
(43) Veröffentlichungstag der Anmeldung: 12.06.1991
(73) Patentinhaber: PLANSEE TIZIT GESELLSCHAFT M.B.H., 6600 Reutte/Tirol (AT)
(72) Erfinder:
(74) Vertreter: Lohnert, Wolfgang, Dr.

(56) Entgegenhaltungen:
- EP-A- 0 223 909
- DE-A- 2 512 854
- US-A- 2 422 994
- PATENT ABSTRACTS OF JAPAN, Band 13, Nr. 418 (M-871)[3766], 18. September 1989; & JP-A-1156405 (SUMITOMO ELECTRIC)
- PATENT ABSTRACTS OF JAPAN, Band 13, Nr. 305 (M-849)[3653], 13. Juli 1989;& JP-A-1 96 305 (HITACHI METALS LTD) 14-04-1989
- PATENT ABSTRACTS OF JAPAN, Band 14, Nr. 186 (M-962)[4129], 16. April 1990;& JP-A-2 34 702 (HITACHI METALS LTD) 05-02-1990

## Beschreibung

Die Erfindung betrifft ein pulvermetallurgisches Verfahren zur Herstellung eines zylindrischen, metallischen oder keramischen Rohlings mit einer oder mehreren innenliegenden verdrallten Längsbohrungen, bei dem das mittels Strangpressen verformbare, plastifizierte, pulverförmige Ausgangsmaterial durch einen von einer Düse und einem Dorn gebildeten Raum gepreßt wird, wobei an dem vor dem Innenraum der Düse endenden Dorn ein oder mehrere Mittelstifte zur Ausbildung der Längsbohrungen befestigt sind sowie ein Strangpreßwerkzeug zur Anwendung des Verfahrens.

Die EP-A1 0-223 909 betrifft ein derartiges Verfahren und ein entsprechendes Strangpreßwerkzeug zur Anwendung des Verfahrens. Entsprechend dieser Vorveröffentlichung werden damit Hartmetall- oder Keramikbohrerrohlinge mit mindestens einer verdrallten innenliegenden Kühlmittelbohrung hergestellt. Die am Dorn befestigten Mittelstifte zur Herstellung der Kühlmittelbohrungen sind gerade ausgeführt und aus einem elastischen Material, z. B. aus Kupfer oder einer Kupferlegierung, hergestellt. Die Verdrallung des Bohrerrohlings und damit der innenliegenden Kühlmittelkanäle erfolgt durch eine oder mehrere wendelförmig verlaufende Stege oder Nuten, die auf dem Innenmantel der Düse angeordnet sind. Die durch die wendelförmigen Stege der Düse eingeformten schraubenförmigen Nuten des Bohrerrohlings sind weitgehend als Spankammern des späteren Bohrers vorgeformt und müssen nur mehr geringfügig nachgeschliffen werden. Durch die beim Strangpreßvorgang von den Verdralleinrichtungen der Düse hervorgerufene Verdrallung des Bohrerrohlings werden die elastischen Mittelstifte ebenfalls verdrallt und ergeben so die verdrallten Kühlmittelbohrungen.

Nachteilig dabei ist, daß aufgrund der Elastizität der Dorne eine symmetrische Positionierung der Kühlmittelbohrungen innerhalb des Bohrerrohlings nicht möglich ist und die effektive Lage der Kühlmittelbohrungen innerhalb der einzelnen Rohlinge stark schwanken kann. Damit kann es zu unterschiedlichen Wanddicken zwischen den Kühlmittelbohrungen und den Spankammern kommen, was beim endgültigen Einschleifen der Spankammern sogar zu einer völligen Offenlegung der Kühlmittelbohrung und damit zu einem Ausschuß des Bohrerrohlings führen kann.

In den japanischen Patentanmeldungen JP-A 1-96305 sowie JP-A 1-156405 sind ebenfalls Einrichtungen zur Vorformung von Sinterkörpern durch Strangpressen dargestellt, bei denen im Zuge eines einstufigen Verfahrens verdrallte, wendelförmige Innenbohrungen in das Strangpreßmaterial eingebracht werden.
Die Einrichtung gemäß JP-A 1-96305 weist einen innenliegenden Dorn mit starren Mittelstiften auf und weiterhin wendelförmige Stege bzw. Flossen auf dem Innenmantel des Werkzeuges, insbesondere auch im Innenmantel der Düse. Die wendelförmigen Flossen erstrecken sich aber nicht bis zur Düsenspitze, sondern laufen am Innenmantel örtlich vor der Düsenspitze aus, der Endabschnitt der Düse weist also keine Flossen mehr auf. Dieses Auslaufen der Flossen im Düseninneren soll sicherstellen, daß das extrudierte Material an seiner Oberfläche diejenigen Rillen nicht mehr aufweist, die es beim Durchlaufen des ersten Werkzeugabschnittes durch die auf der Manteloberfläche angebrachten Flossen erhalten hat. Die vorverdrallten starren Mittelstifte setzen, in Extrudierlängsrichtung gesehen, dort am Dorn an, wo im Innenmantel der Düse die Flossen auslaufen. Die verdrallten Mittelstifte haben dementsprechend die Aufgabe, in dem durch die Flossen vorverdrallten, eine Rotationsbewegung aufgezwungenen Material verdrallte Innenbohrungen zu formen und die Beibehaltung der verdrallten Innenbohrung bis zum Austritt des extrudierten Materials aus dem Werkzeug zu gewährleisten.

Diese Ausführung weist eine Reihe von Nachteilen auf. Die Fertigung entsprechend gewendelter Flossen auf der Mantelinnenseite des Strangpreßwerkzeuges ist in der Herstellung aufwendig und teuer. Die baulich schwierige Abstimmung der Flossensteigung im Innenmantel mit der örtlichen Positionierung und Steigung der vorverdrallten Mittelstifte läßt nur einen begrenzten Standard bei der Qualität der technischen Ausführung der verdrallten Innenbohrungen zu.

Im Unterschied zur vorgenannten Ausführung weist die Strangpreßeinrichtung nach der JP-A 1-156405 sowohl starre, vorverdrallte Mittelstifte im Düsenbereich des Werkzeuges als auch mit gleicher Steigung verdrallte Stege in der Innenwand der gesamten Düse auf. Zu den vorgenannten Nachteilen der hohen Werkzeugkosten kommt hier der Nachteil hinzu, daß die aus der Extrudiereinrichtung austretenden Rohlinge in ihrer äußeren Oberfläche Rillen entsprechend der Flossen der Düseninnenwand aufweisen. Diese Rillen sind vielfach unerwünscht. Derartig extrudierte Teile müssen entsprechend nach dem Sintern und vor der Werkstück-Endbearbeitung durch Schleifen von den Rillen befreit werden.

Die Aufgabe der vorliegenden Erfindung besteht darin, ein Verfahren zur Herstellung eines zylindrischen Rohlings mit ein oder mehreren innenliegenden verdrallten Längsbohrungen zu schaffen, bei dem die Lage der verdrallten Längsbohrungen innerhalb des zylindrischen Rohlings möglichst symmetrisch ist und zwischen den einzelnen Rohlingen eines Fertigungsloses möglichst gleichförmig ist.

Diese Aufgabe wird dadurch gelöst, daß die Verdrallung der Längsbohrungen ausschließlich mittels vorverdrallter, starrer Mittelstifte erfolgt. Das Strangpreßwerkzeug zur Anwendung des Verfahrens weist demnach eine glattwandige, keine Verdrallhilfen aufweisende Düse und einen Dorn mit daran angebrachten Mittelstiften auf, die in den Innenraum der Düse hineinragen, und wobei der dem Werkzeugende zugewandten Spitze des Dornes ein oder mehrere, in bezug auf die Düsenlängsachse vorverdrallte, starre Mittelstifte mit dem gewünschten Durchmesser der Längsbohrungen befestigt sind.

Durch die Abwandlung des bekannten Verfahrens auf die erfindungsgemäße Art und Weise wird erreicht, daß die Lage der verdrallten Längsbohrungen innerhalb des zylindrischen Rohlings möglichst symmetrisch ist und innerhalb eines Fertigungsloses weitgehend gleichbleibend ist.

Darüberhinaus wurde aber auch völlig überraschend erreicht, daß auf zusätzliche Verdralleinrichtungen in der Düse, die an der Oberfläche des Rohlings wendelförmig verlaufende Stege oder Nuten einarbeiten würden, verzichtet werden kann. Die Verdrallung des Rohlings erfolgt dann ausschließlich über die vorverdrallten starren Mittelstifte. Damit ist die Oberfläche des fertigen Rohlings glatt und muß je nach Art der weiteren Anwendung nur mehr geringfügig oder überhaupt nicht mehr nachgeschliffen werden. Sollen aus dem Rohling Bohrwerkzeuge mit schraubenförmig angeordneten Spankammern gefertigt werden, ist man mit der Lagepositionierung dieser Spankammern bei der Einarbeitung frei und kann diese noch besser an den Verlauf der verdrallten Innenbohrungen anpassen.

In Ausnahmefällen, wie z. B. bei sehr großen Durchmessern der Rohlinge im Verhältnis zu relativ kleinen Durchmessern der Längsbohrungen kann es vorteilhaft sein, die Verdrallung des Rohlings durch zusätzliche Drallhilfen in der Düse, wie Nuten oder Stege, zu verstärken. In diesen Fällen ist es aber schon ausreichend, die Düse nur über einen sehr schmalen Bereich mit diesen zusätzlichen Verdrallhilfen zu versehen. Es ist nicht notwendig, daß sich die Stege oder Nuten der Düse über die gesamte Innenfläche der Düse erstrecken. Darüberhinaus können die Nuten oder Stege durch die Anwendung des erfindungsgemäßen Verfahrens sehr klein dimensioniert sein.

Vor Beginn der Produktion der Strangpreßrohlinge wird in Abhängigkeit vom gewünschten Rohlingsdurchmesser unter Berücksichtigung des gewünschten Durchmessers der verdrallten Längsbohrungen der Grad der Plastifizierung des Ausgangsmaterials und die Strangpreßgeschwindigkeit so gewählt, daß die durch die vorverdrallten Mittelstifte vorgegebene Verdrallung der Längsbohrungen im fertigen Rohling weitgehend erhalten bleibt.

Geeignetes Material zur Herstellung der Mittelstifte ist Hartmetall. Dieses Material hat sich aufgrund seiner hohen Starrheit, insbesondere bei Rohlingen mit größeren Durchmessern, bewährt.

Bei kleineren Rohlingsdurchmessern und damit auch in der Regel kleineren Durchmessern der Längsbohrungen kann es bei Verwendung von Hartmetall für die Mittelstifte, aufgrund der Sprödigkeit des Hartmetalls, zu einem Abreißen der Mittelstifte kommen. Für solche Anwendungen ist die Verwendung von Stahl für die Mittelstifte besonders geeignet.

In Fällen wo es aufgrund der besonderen Abmessungen des Rohlings, insbesondere bei großen Außendurchmessern und geringen Durchmessern der Längsbohrungen, nicht möglich ist durch Einstellen des Plastifizierungsgrades und Abstimmung der Strangpreßgeschwindigkeit aufgrund einer gewissen Restelastizität der Mittelstifte ein leichtes Entdrallen ihrer vorgegebenen Form im Zuge des Strangpreßvorganges zu vermeiden, ist es vorteilhaft, die Mittelstifte stärker zu verdrallen als dies im fertigen Rohling gewünscht ist. Auf diese Weise ergibt sich durch die Entdrallwirkung im Zuge des Strangpreßvorganges eine Herstellung des fertigen Rohlings mit der gewünschten Verdrallung der innenliegenden Längsbohrungen. Der Grad der zusätzlichen Verdrallung der Mittelstifte kann in Abhängigkeit von der Plastifizierung des Ausgangsmateriales und der Strangpreßgeschwindigkeit durch Versuche ermittelt werden.

Da die Positionierung der Längsbohrungen im fertigen Rohling weitgehend symmetrisch und innerhalb eines Fertigungsloses gleichbleibend ist, ist es durch das erfindungsgemäße Verfahren bei der Herstellung von Bohrerrohlingen auch möglich, die innenliegenden Kühlmittelbohrungen mit einem ovalen Querschnitt auszuführen und die Längsachse des Ovals so zu positionieren, daß die verbleibende Wandstärke zwischen Kühlmittelbohrung und Mantelfläche bzw. Oberfläche der Spankammern nicht unzulässig vermindert wird. Auf diese Weise ist durch die Querschnittsvergrößerung eine besonders gute Versorgung der Schneidkante mit Kühlmittel möglich.

Das erfindungsgemäße Verfahren ist zur Herstellung von Rohlingen aus Hartmetall, Keramik oder Stahl geeignet.

Im folgenden wird die Erfindung anhand von Figuren und anhand eines Beispieles näher erläutert.

Es zeigen:
- Figur 1a: einen erfindungsgemäß hergestellten Bohrerrohling mit zwei innenliegenden, verdrallten Kühlmittelbohrungen
- Figur 1b: den Querschnitt des Bohrerrohlings nach Figur 1a
- Figur 2: ein Strangpreßwerkzeug zur Herstellung eines Bohrerrohlings mit zwei innenliegenden verdrallten Längsbohrungen

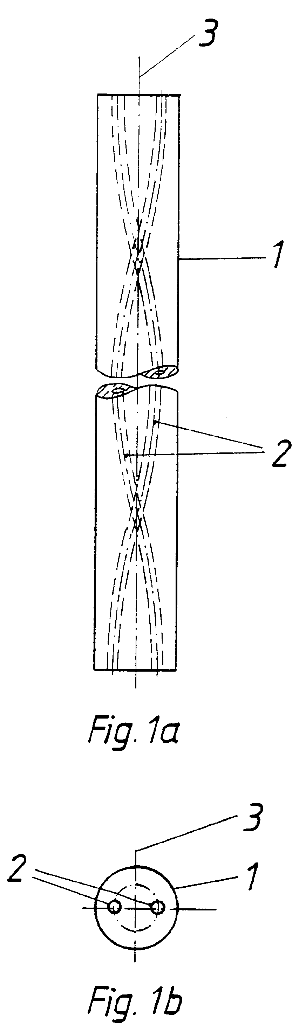

In den Figuren 1a und 1b ist ein Bohrerrohling aus Hartmetall dargestellt, der nach dem erfindungsgemäßen Verfahren hergestellt wurde. Der Bohrerrohling -1- weist zwei innenliegende, verdrallte Kühlmittelbohrungen -2- auf, die symmetrisch zur Achse -3- des Bohrerrohlings -1- angeordnet sind.

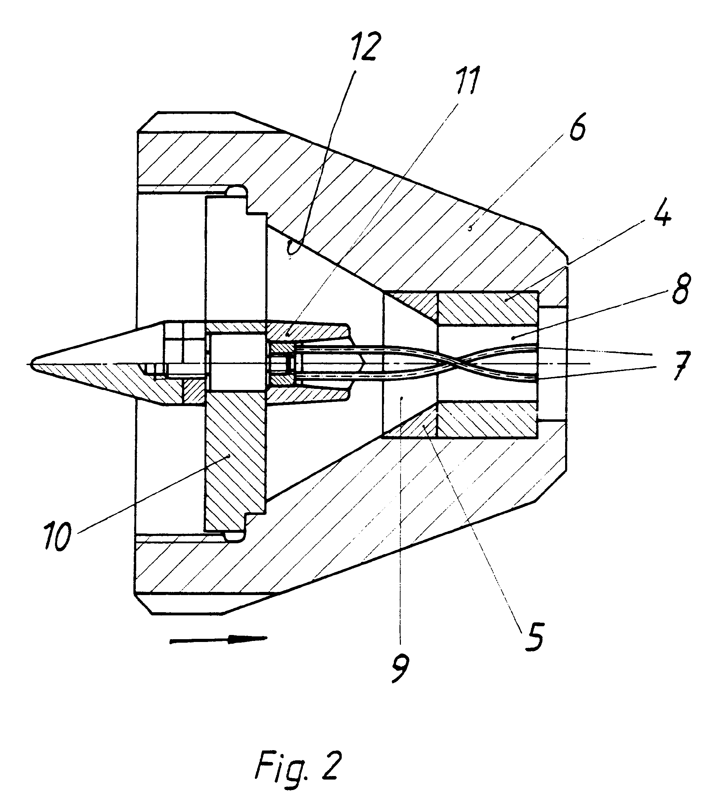

Die Figur 2 zeigt ein erfindungsgemäßes Strangpreßwerkzeug, bestehend aus einer in etwa glockenförmigen Düsenfassung -6-, an deren dünnerem, auslaufseitigem Ende eine Düse -4- mit einer vorgeschalteten Einlaufdüse -5- angeordnet sind. Die Düse -4- ist ringförmig mit einer zylindrischen Innenmantelfläche -8- ausgeführt, welche übergangslos in die sich kegelförmig erweiternde Innenmantelfläche -9- der Einlaufdüse -4- übergeht. Die kegelförmige Innenmantelfläche -9- der Einlaufdüse -4- geht wiederum übergangslos in die kegelförmige Mantelfläche -12- der Düsenfassung -6- über. Am einlaufseitigen Ende der Düsenfassung -6- ist ein Dornhalter -10- angeordnet, der einen Dorn -11- so in der Ausnehmung der Düsenfassung positioniert, daß die Längsachse des Dornes -11- mit der Längsachse der Düse -4- und Einlaufdüse -5- fluchtet und der Dorn -11- kurz vor der Einlaufdüse -5- endet.
Am Ende des Dornes -11- sind in Richtung der Längsachse symmetrisch dazu zwei wendelförmig verdrallte Mittelstifte -7- aus Hartmetall angeordnet, die in den Innenraum der Einlaufdüse -5- und Düse -4- ragen.

### Beispiel

Entsprechend dem erfindungsgemäßen Verfahren wurde ein Bohrerrohling mit innenliegenden verdrallten Längsbohrungen für die Kühlmittelzufuhr aus Hartmetall hergestellt.

Als Ausgangsmaterial wurde ein Hartmetallansatz mit 12 Gew.% Co, 4 Gew.% TiC, 7,5 Gew.% TaNbC, Rest WC verwendet. Die Pulvermischung wurde auf eine bei der Hartmetall-Herstellung übliche mittlere Korngröße von 1 - 2µm gemahlen und getrocknet. Vor dem Strangpressen wurde die Pulvermischung mit für das Strangpressen üblichen Preßzusätzen, z.B. Paraffin, vermischt und in einem Knetmischer einer Knetbehandlung von mindestens 30-minütiger Dauer unterzogen. Der Knetvorgang erfolgte bei Raumtemperatur, wobei die Temperatur über die gesamte Knetbehandlung konstant gehalten wurde. Das geknetete Ausgangsmaterial wurde in den Rezipienten der Strangpresse eingefüllt, evakuiert und mit mindestens 100 bar vorverdichtet. Der Strangpreßvorgang erfolgte mit dem erfindungsgemäßen Strangpreßwerkzeug, wobei das Ausgangsmaterial entsprechend der Figur 2 in Pfeilrichtung in den zwischen dem Dorn -11- und der Düsenfassung -6- gebildeten Raum sowie durch die Einlaufdüse -5- und Düse -4- gepreßt wurde, wodurch das Ausgangsmaterial verdichtet und in der Düse -4- zylindrisch geformt wurde.
Durch die ausreichende Plastifizierung des Ausgangsmaterials wurde erreicht, daß sich der Preßstrang den wendelförmig verdrallten Mittelstiften -7- anpaßte, so daß die Kühlmittelbohrungen -2- in der gewünschten Verdrallung und Position in den Bohrerrohling -1- eingeformt wurden. Die freie Länge der wendelförmig verdrallten Mittelstifte -7- zwischen dem Ende des Dornes -11- und dem Anfang der Düse -4- betrug 20 mm. Dieser Wert ergab für den gewählten Durchmesser des Bohrerrohlings optimalen Materialfluß beim Strangpressen und damit eine optimale Verdichtung des Rohlings.

## Patentansprüche

1. Pulvermetallurgisches Verfahren zur Herstellung eines zylindrischen, metallischen oder keramischen Rohlings (1) mit einer oder mehreren innenliegenden verdrallten Längsbohrungen (2), bei dem das mittels Strangpressen verformbare, plastifizierte, pulverförmige Ausgangsmaterial durch einen von einer Düse (4) und einem Dorn (11) gebildeten Raum gepreßt wird, wobei an dem vor dem Innenraum (8) der Düse (4) endenden Dorn (11) ein oder mehrere Mittelstifte (7) zur Ausbildung der Längsbohrungen (2) befestigt sind,
**dadurch gekennzeichnet,**
daß die Verdrallung der Längsbohrungen ausschließlich mittels vorverdrallter starrer Mittelstifte erfolgt.

2. Strangpreßwerkzeug zur Durchführung des Verfahrens nach Anspruch 1, das eine glattwandige, keine Verdrallhilfen aufweisende Düse (4) und einen Dorn (11) mit einem oder mehreren an dessen Spitze angebrachten, in den Innenraum (8) der Düse (4) hineinragende Mittelstife (7) aufweist, dadurch gekennzeichnet, daß an dem Dorn (11) ein oder mehrere, in bezug auf die Düsenlängsachse vorverdrallte, starre Mittelstifte (7) mit dem gewünschten Durchmesser der Längsbohrungen (2) befestigt sind.

3. Strangpreßwerkzeug nach Anspruch 2, dadurch gekennzeichnet, daß die Mittelstifte (7) aus Hartmetall bestehen.

4. Strangpreßwerkzeug nach Anspruch 2, dadurch gekennzeichnet, daß die Mittelstifte (7) aus Stahl bestehen.

5. Strangpreßwerkzeug nach Anspruch 2, 3 oder 4, dadurch gekennzeichnet, daß die Mittelstifte (7) stärker verdrallt sind als der im zylindrischen Rohling gewünschte Drall der Längsbohrungen (2).

6. Strangpreßwerkzeug nach einem der Ansprüche 2 - 5, dadurch gekennzeichnet, daß die Mittetstifte (7) einen ovalen Querschnitt aufweisen.

## Claims

1. A powder-metallurgical method for manufacturing a cylindrical, metallic or ceramic blank (1) with one or more internal, twisted longitudinal bores (2), in which the plasticised, pulverulent starting material, which can be moulded by extrusion-moulding, is compressed by a chamber formed by a nozzle (4) and a mandrel (11), one or more central rods (7) being secured to the mandrel (11) ending in front of the inner chamber (8) of the nozzle (4) in order to form the longitudinal bores (2), characterised in that the twisting of the longitudinal bores is effected exclusively by means of pre-twisted, rigid central rods.

2. An extrusion tool for carrying out the method according to claim 1, which comprises a smooth-walled nozzle (4) without any twisting aids and a mandrel (11) with one or more central rods (7), which are fitted to the tip of the mandrel and project into the inner chamber (8) of the nozzle (4), characterised in that one or more rigid central rods (7) having the desired diameter of the longitudinal bores (2) and pre-twisted in relation to the longitudinal axis of the nozzle (4) are secured to the mandrel (11).

3. An extrusion tool according to claim 2, characterised in that the central rods (7) are made of hard metal.

4. An extrusion tool according to claim 2, characterised in that the central rods (7) are made of steel.

5. An extrusion tool according to claim 2, 3 or 4, characterised in that the central rods (7) are more tightly twisted than the desired twist of the longitudinal bores (2) in the cylindrical blank.

6. An extrusion tool according to one of claims 2 to 5, characterised in that the central rods (7) have an oval cross-section.

## Revendications

1. Procédé de fabrication, par métallurgie des poudres, d'une ébauche cylindrique, métallique ou céramique, (1) dans laquelle sont ménagés un ou plusieurs alésages longitudinaux intérieurs à structure torsadée, selon lequel le produit de départ pulvérulent plastifié, déformable au moyen de presses extrudeuses, est extrudé à travers un espace formé par une buse (4) et un mandrin (11), une ou plusieurs tiges médianes (7) de formation des alésages longitudinaux (2) étant fixées au mandrin (11) qui se termine devant l'espace interne (8) de la buse (4),
caractérisé en ce que
la formation en torsade des alésages longitudinaux s'effectue exclusivement au moyen de tiges médianes rigides torsadées au préalable.

2. Outil d'extrusion de mise en oeuvre du procédé selon la revendication 1, qui présente une buse (4) à parois lisses, ne présentant aucun accessoire de torsion, et un mandrin (11) pourvu d'une ou plusieurs tiges médianes (7) montées à sa pointe, pénétrant dans l'espace intérieur (8) de la buse (4),
caractérisé en ce qu'une ou plusieurs tiges médianes rigides (7) présentant le diamètre souhaité des alésages longitudinaux (2), torsadées au préalable par rapport à l'axe longitudinal de la buse, sont fixées sur mandrin (11).

3. Outil d'extrudeuse selon la revendication 2, caractérisé en ce que les tiges médianes (7) sont en métal dur.

4. Outil d'extrudeuse selon la revendication 2, caractérisé en ce que les tiges médianes (7) sont en acier.

5. Outil d'extrudeuse selon la revendication 2, 3 ou 4, caractérisé en ce que la torsion des tiges médianes (7) est plus forte que la torsion souhaitée pour les alésages longitudinaux (2) dans l'ébauche cylindrique.

6. Outil d'extrudeuse selon l'une des revendications 2 à 5, caractérisé en ce que la section transversale des tiges médianes (7) est ovale.
